# EUROPEAN PATENT APPLICATION

(11) **EP 4 763 726 A2**
(43) Date of publication of application: **24.06.2026**
(21) Application number: 25212932.5
(22) Date of filing: 03.11.2025
(51) Int. Cl.: B65B 59/04, B65B 9/04, B65B 29/02, B65B 47/02, B65B 65/02

(54) **AUTOMATIC MACHINE FOR THE PRODUCTION R THE PACKAGING OF PRODUCTS AND PROVIDED WITH AT LEAST ONE REMOVABLE DRUM**

(30) Priority: 17.12.2024 IT 202400028692
(71) Applicant: Sasib S.p.A., 40013 Castel Maggiore (BO) (IT)
(72) Inventor: GHIOTTI, Roberto, 40013 Castel Maggiore (BO) (IT); MONTANARI, Andrea, 40013 Castel Maggiore (BO) (IT)
(74) Representative: Studio Torta S.p.A.

(57) **Abstract**

An automatic machine (6) for the production or the packaging of products (1), in particular smoking, sanitary, food, or pharmaceutical products (1). The automatic machine (6) has: a frame (F); a processing line, along which the products (1) are processed; and at least one drum (7), which constitutes part of the processing line and has a support pin (17), which is mounted on the frame (F) in a rotary manner so as to rotate around a rotation axis (8), and a sleeve (18), which is integral with the support pin (17) and is arranged around the support pin (17). The sleeve (18) and the support pin (17) are shaped so as to enable an axial movement of the sleeve (18) relative to the support pin (17) so as to axially fit the sleeve (18) around the support pin (17) and so as to axially remove the sleeve (18) from the support pin (17).

## Description

### CROSS-REFERENCE TO RELATED APPLICATIONS

This patent application claims priority from Italian patent application no. 102024000028692 filed on December 17, 2024, the entire disclosure of which is incorporated herein by reference.

### TECHNICAL FIELD

The present invention relates to an automatic machine for the production or the packaging of products provided with at least one removable drum.

The present invention is advantageously applied to an automatic machine for the production of snus pouches (namely permeable small bags, each containing a prepacked quantity of a tobacco- and/or nicotine-based loose product for oral use), to which the following disclosure will explicitly refer without thereby losing generality.

### PRIOR ART

Patent application WO2024201339A1 describes a manufacturing machine for the production of snus pouches comprising: a first forming drum which is mounted so as to rotate and has a (at least one) pocket which reproduces in negative part of a shape of the pouch; a second forming drum which is mounted so as to rotate and is coupled to the first forming drum so as to define a joining area comprised between the two forming drums; a first feeding unit configured to feed, in a first feeding station arranged upstream of the joining area, a first wrapping material band, which wraps itself around part of the periphery of the first forming drum; a second feeding unit configured to feed, in a second feeding station arranged upstream of the joining area, a second wrapping material band, which wraps itself around part of the periphery of the second forming drum, so that the second wrapping material band overlaps the first wrapping material band in the joining area, thereby forming the pouch; and a third feeding unit configured to feed, in a third feeding station arranged between the insertion device and the joining area, the quantity of the loose product into the pocket of the first forming drum covered by the first wrapping material band.

In the past, a manufacturing machine for the production of snus pouches was assigned to manufacture one single size of snus pouches, the production of which was carried out without modifications for very long periods of time. In recent years, attempts have been made to replace such production philosophy with a production philosophy of the "*just in time"* type, which provides for frequently modifying the size of the snus pouches which must be manufactured by a same manufacturing machine so as to adapt in real time to market demands and thus avoid stockpiling. Consequently, it is increasingly frequent to carry out, in a manufacturing machine for the production of snus pouches, frequent changes in size for modifying the size of snus pouches being produced.

A size change operation in the packaging machine described in patent application WO2024201339A1 mainly provides for replacing the pockets in the forming drums and this operation can be executed by integrally replacing the forming drums or replacing the supports of the pockets on the periphery of the forming drums; in any case, it is necessary to remove the forming drums from the frame of the manufacturing machine and this operation is relatively long and laborious and especially requires the intervention of particularly skilled technical personnel so as to avoid errors that can lead to a defective production or even to mechanical breakages.

Patent application CN112224478A describes a drum-type packaging machine for wrapping single quantities of washing machine or dish washer detergent with a water-soluble film; the drum has a removable and replaceable sleeve.

Patent application US2023146996A1 describes a sheeter comprising a cutting drum equipped with a drive shaft and with a removable and replaceable cutting sleeve coupled to the drive shaft.

Patent US1209071082 describes a packaging machine comprising two counter-rotatable sealing drums for pressing together two fabric bands so as to produce pockets intended to contain a substance for preparing beverages and to seal around the pockets.

Patent application US2024017861A1 describes a packaging machine for producing small bags containing portions of a loose product.

Patent application EP1918207A1 describes a sealing unit comprising two counter-rotatable sealing drums, each having a removable and replaceable sleeve.

Patent application US2024225014A1 describes a drum equipped with removable and replaceable sleeves.

Patent application EP4011791A1 describes a manufacturing machine for manufacturing cigarettes comprising a plurality of drums which can have a removable and replaceable sleeve.

### DESCRIPTION OF THE INVENTION

The object of the present invention is to provide an automatic machine for the production or the packaging of products provided with at least one removable drum, wherein the operations for mounting and removing the drum are particularly quick and simple even for an unskilled operator.

In accordance with the present invention, an automatic machine for the production or the packaging of products provided with at least one removable drum is provided, according to what claimed in the appended claims.

The claims describe preferred embodiments of the present invention forming integral part of the present description.

### BRIEF DESCRIPTION OF THE DRAWINGS

The present invention will now be described with reference to the accompanying drawings, which illustrate a non-limiting example embodiment thereof, wherein:
- Figures 1, 2 and 3 are a perspective view, a side view and a plan view, respectively, of a snus pouch;
- Figure 4 is an exploded side view of the snus pouch of Figures 1, 2 and 3;
- Figure 5 is a schematic front view of a manufacturing machine which manufactures the snus pouches of the type of that of Figures 1, 2 and 3;
- Figure 6 is a perspective view, with parts removed for clarity, of part of the manufacturing machine of Figure 5;
- Figure 7 is a partially exploded perspective view, with parts removed for clarity, of the manufacturing machine of Figure 5;
- Figure 8 is an enlarged view of part of a support pin of a forming drum;
- Figure 9 is a perspective view of a sleeve of a forming drum;
- Figures 10 and 11 are two different exploded perspective views of a forming drum; and
- Figure 12 is a longitudinal cross-section view of a forming drum.

### PREFERRED EMBODIMENTS OF THE INVENTION

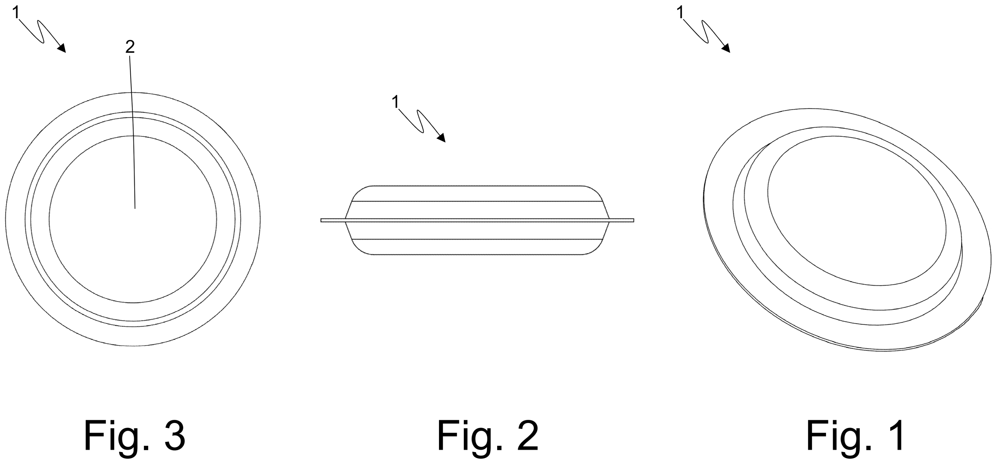

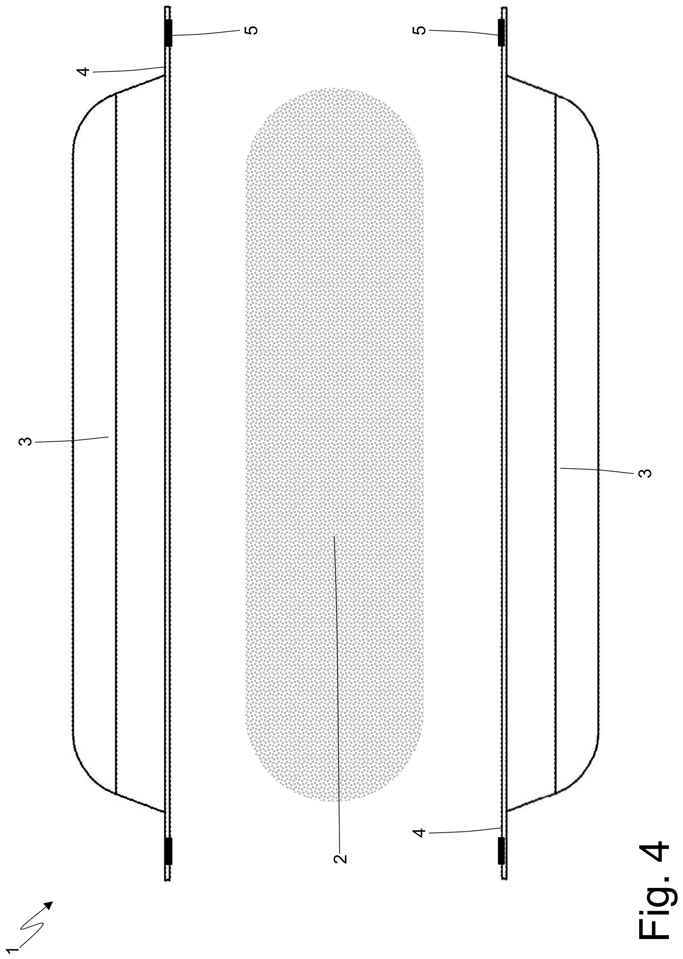

In Figure 1, reference numeral 1 indicates, as a whole, a snus pouch which contains, on the inside, a quantity 2 of snus (illustrated in Figure 4), namely of a tobacco- and/or nicotine-based loose product for oral use. A loose product is a product that does not have a defined shape, namely a product devoid of a shape of its own and which thus adapts to the shape of the container containing it. A more or less moist loose product which can be liquid or gelatinous or granular. In the embodiment illustrated in the accompanying figures, the snus is a loose product (i.e. without a defined shape) of the granular type which contains, for example, tobacco and/or nicotine (normally mixed with other components).

In the embodiment illustrated in the accompanying figures, the snus pouch 1 has in plan a circular shape, but according to other embodiments the snus pouch 1 could have in plan different and more or less regular shapes, for example a star shape, a triangular shape, a heart shape, a polygonal shape or an oval shape.

According to what is illustrated in Figure 4, the snus pouch 1 comprises two cup-shaped elements 3 which are overlapped so as to delimit between them a closed volume in which the quantity 2 of snus is housed; each element 3 has a flat edge 4 which runs all the way around the element 3 so that the two flat edges 4 of the two elements 3 overlap and are joined by a seal 5 which is closed on itself (namely has an annular shape without head or tail). In other words, the pouch 1 has one sole annular seal 5 (closed on itself without head or tail) which connects the two elements 3 to each other. It is understood that not necessarily both two elements 3 are cup-shaped; for example, one of them could be cup-shaped and the other one could be flat.

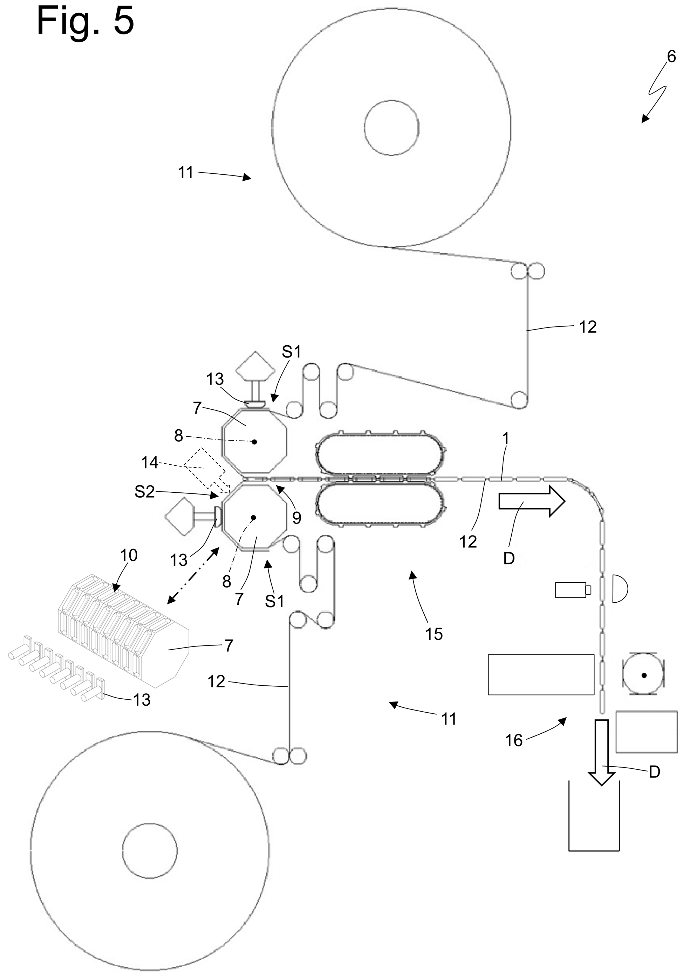

In Figure 5, reference numeral 6 indicates, as a whole, a manufacturing machine which produces the snus pouches 1.

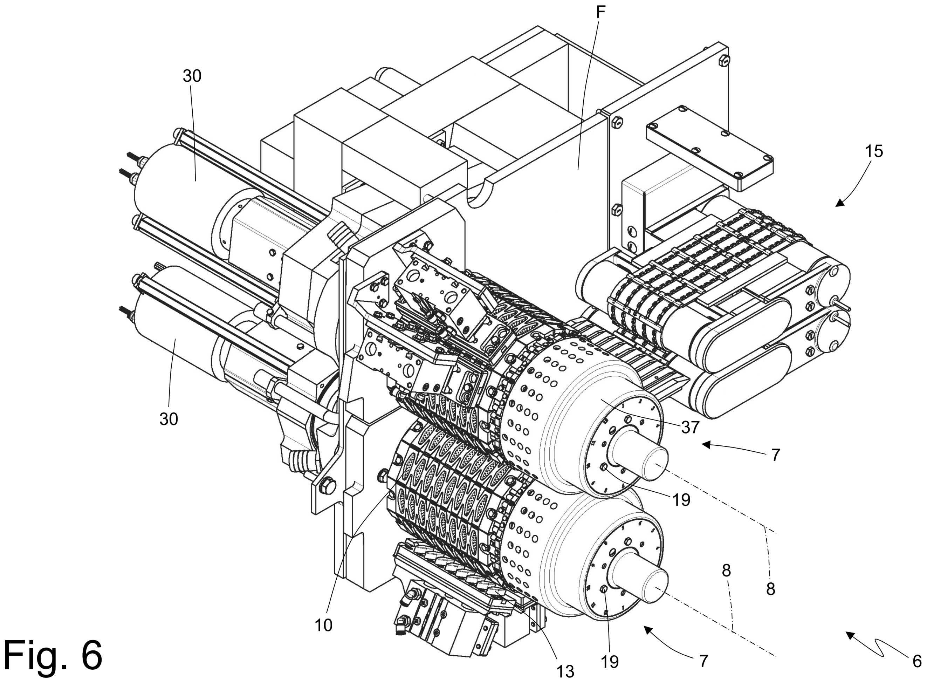

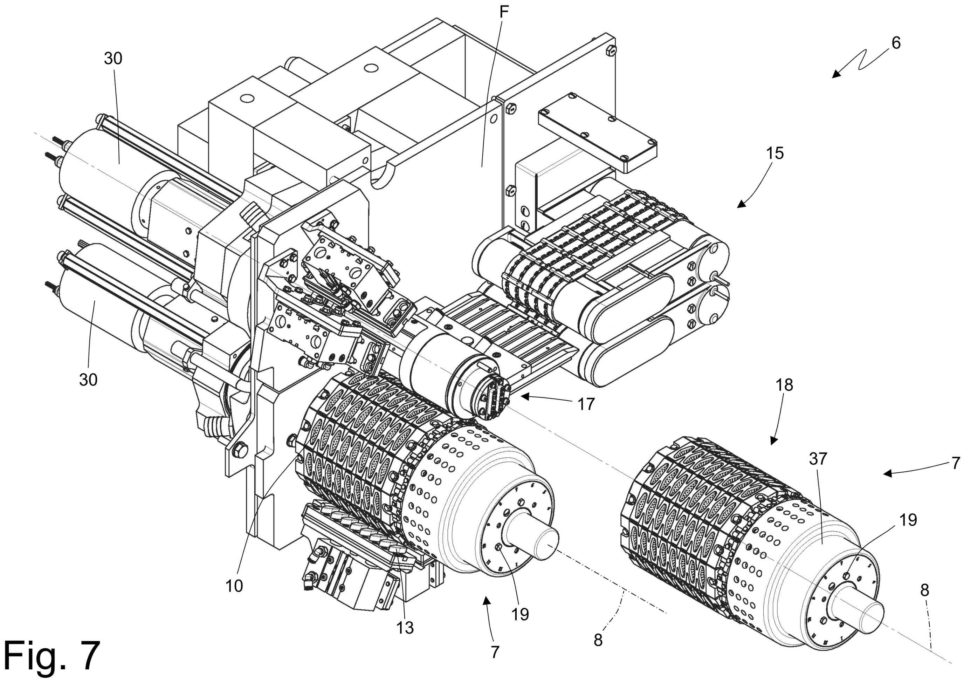

The manufacturing machine 6 comprises a frame F (partially illustrated in Figures 6 and 7) which rests on a floor and has a vertical support wall (the *"front"* wall of the manufacturing machine 6 and coinciding with the plane of Figure 5) on which all the operating components concurring to the production of the snus pouches 1 are mounted.

The manufacturing machine 6 comprises a first forming drum 7 which has at least one first pocket 10 which reproduces in negative part of a shape of the pouch 1 and a second forming drum 7 which is coupled to the first forming drum 7 so as to define a joining area 9 comprised between the two forming drums 7.

In accordance with a preferred embodiment, the two forming conveyors 7 each comprise a forming drum. In particular, the manufacturing machine 6 comprises two forming drums (substantially identical to each other) which are mounted so as to rotate with a law of intermittent motion (namely a law of motion which cyclically alternates motion phases and stop phases) around respective rotation axes 8 which are horizontal and parallel to each other (and perpendicular to the plane of Figure 5).

The two forming conveyors 7 are cooperating with (coupled to) each other and are arranged on top of each other so as to define a joining area 9 between them comprised between the two forming conveyors 7; namely the two forming conveyors 7 are arranged vertically aligned at different heights so that one forming drum 7 is on top and the other forming drum 7 is underneath.

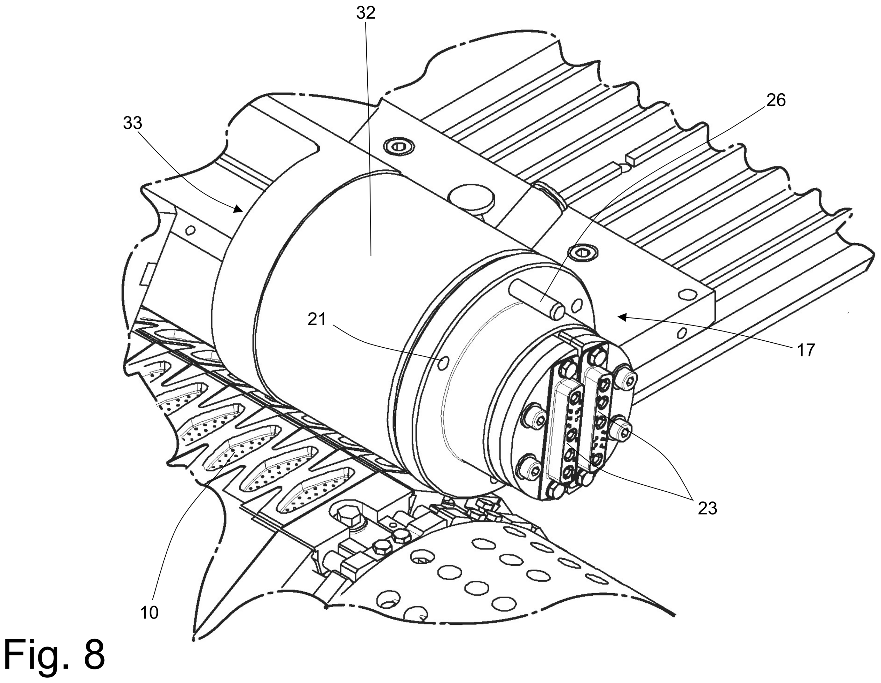

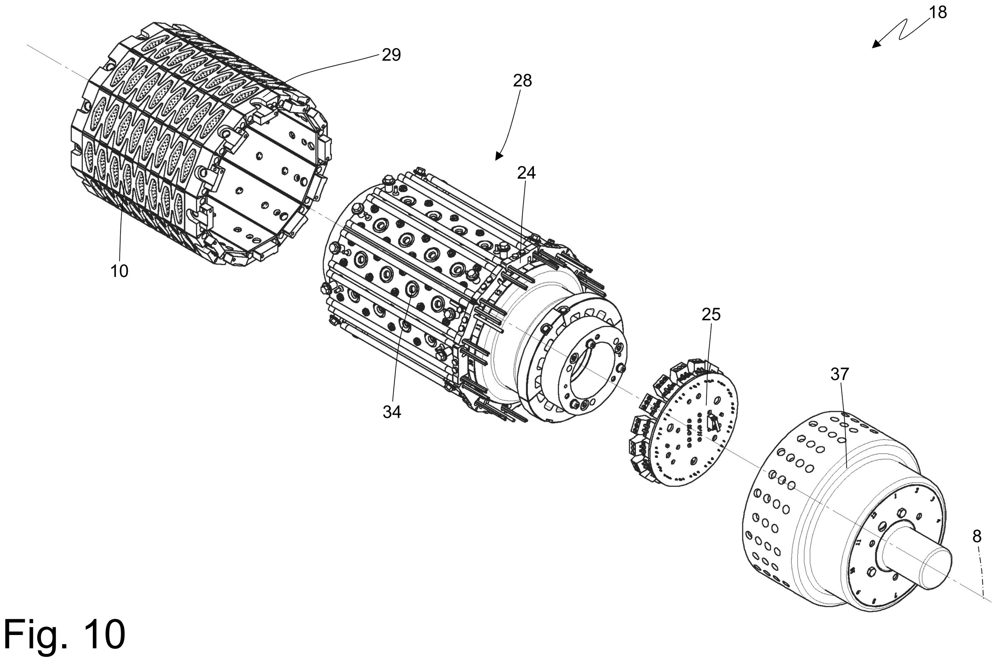

Each forming drum 7 has a plurality of pockets 10 (better illustrated in Figures 8 and 10), each of which reproduces in negative part of a shape of the snus pouch 1; in particular, each pocket 10 reproduces in negative the shape of one of the two cup-shaped elements 3 which together constitute the snus pouch 1. Namely each pocket 10 (or seat 10) is a recess which is hollowed on the outer surface of the respective forming drum 7 and reproduces in negative the shape of one of the two cup-shaped elements 3 which together constitute the snus pouch 1. In the embodiment illustrated in the accompanying figures, each forming drum 7 has more groups (in particular, eight groups) of pockets 10, each having a series of pockets 10 (in particular, eight pockets 10) arranged side by side and aligned parallel to the rotation axis 8. In this manner, in the joining area 9 defined between the two forming drums 7, at every working cycle, a series of snus pouches 1 (in particular, eight snus pouches 1) are formed equal to the number of pockets 10 of each group. According to other embodiments not illustrated, the number of groups of pockets 10 of each forming drum 7 and/or the number of pockets 10 of each group could be different.

Each pocket 10 of one forming drum 7 always cooperates with a same corresponding pocket 10 of the other forming drum 7 and, in the embodiment illustrated in the accompanying figures, each pocket 10 reproduces in negative a shape of a corresponding half (namely of a cup-shaped element 3) of the snus pouch 1 so that two pockets 10 together reproduce in negative the shape of the snus pouch 1. Alternatively, one of the two forming drums 7 could be devoid of the pockets 10.

The manufacturing machine 6 comprises two feeding units 11 (substantially identical to each other), each of which is configured to feed, in a respective feeding station S1 arranged upstream of the joining area 9 relative to the advancement of the corresponding forming drum 7 (in particular relative to the direction of rotation of the respective forming drum 7), a respective wrapping material band 12 which wraps itself around part of the periphery of the respective forming drum 7. In this manner, in the joining area 9, the two forming drums 7 convey the two wrapping material bands 12 towards each other so that the two wrapping material bands 12 overlap and by joining form the snus pouches 1.

In other words, one sole and single wrapping material band 12 is fed and wrapped around each forming drum 7.

The two wrapping material bands 12 overlap only and exclusively in the joining area 9 forming for the first time each pouch 1 which encloses the quantity 2 of snus between the two wrapping material bands 12.

The manufacturing machine 6 comprises two insertion devices 13 (substantially identical to each other), each of which is coupled to a respective forming drum 7 between the respective feeding station S1 and the joining area 9 and is configured to push the respective wrapping material band 12 into the pockets 10 of a same group of pockets 10 of the respective forming drum 7. Namely, each insertion device 13 locally deforms the respective wrapping material band 12 so as to insert the wrapping material band 12 into the pockets 10 of a same group of pockets 10 of the respective forming drum 7 so that the wrapping material band 12 covers the pockets 10; in this manner, in each pocket 10, the wrapping material band 12 assumes the shape of a cup-shaped element 3, namely the shape of a half snus pouch 1. In accordance with different embodiments, the machine could be devoid of the insertion devices 13 or provide for only one insertion device 13 (for example in the case where only one of the two forming drums 7 provides for the pockets 10).

The manufacturing machine 6 comprises one single feeding unit 14 (schematically illustrated in Figure 5) configured to feed, in a feeding station S2 arranged between the feeding station S1 (in particular between the respective insertion device 13) and the joining area 9, a plurality of quantities 2 of snus into the pockets 10 of a group of pockets 10 of the respective forming drum 7 covered by the respective wrapping material band 12 (i.e. with the interposition of the respective wrapping material band 12). Namely one single feeding unit 14 is provided coupled to only one of the two forming drums 7 so as to feed into the pockets 10 of the respective forming drum 7 the quantities 2 of snus (which are held inside the pockets 10 by the sucking action of the pockets 10).

According to a preferred embodiment, at least one forming drum 7 is heated at least around the corresponding pockets 10 so as to obtain a heat sealing (which requires the simultaneous application of heat and pressure) of the two wrapping material bands 12 in the joining area 9, namely to make around each snus pouch 1 the respective annular seal 5 which is closed so as to form a ring around the edge 4 of the snus pouch 1.

In other words, the two forming drums 7 constitute a wrapping system which forms the two wrapping material bands 12 around the quantities 2 of snus for making the snus pouches 1.

According to what is illustrated in Figure 5, the manufacturing machine 6 comprises a conveying device 15, which is arranged downstream of the two forming conveyors 7 and is configured to impart an advancement movement along an advancement direction D to the two overlapped wrapping material bands 12 and in which a sequence of rows of snus pouches 1 is present. The conveying device 15 is configured to advance the two overlapped wrapping material bands 12 according to a law of intermittent advancement (namely a law of motion which cyclically alternates motion phases and stop phases).

According to what is illustrated in Figure 5, the manufacturing machine 6 comprises a cutting unit 16, which is arranged downstream of the two forming drums 7 (namely downstream of the wrapping system) and along the advancement direction D and is configured to cut out the snus pouches 1 within the two overlapped wrapping material bands 12. According to a possible embodiment, the cutting unit 16 mechanically (namely by means of the movement of cutting elements which slide with respect to one another in the area of the cutting lines) cut the overlapped wrapping material bands 12 around the snus pouches 1. According to an alternative embodiment, the cutting unit 16 laser cuts the overlapped wrapping material bands 12 around the snus pouches 1.

In other words, the manufacturing machine 6 comprises a processing line, along which the snus pouches 1 are processed (produced); the two forming drums 7 constitute part of the processing line.

According to what is illustrated in Figures 6 and 7, each forming drum 7 (which constitutes part of the processing line) has a support pin 17, which is mounted on the frame F in a rotary manner so as to rotate around the corresponding rotation axis 8, and a sleeve 18, which is cup-shaped (namely has a cylindrical side wall and a circular front wall on which the cylindrical side wall is grafted), is integral with the support pin 17 and is arranged around the support pin 17 (namely the support pin 17 is arranged inside the sleeve 18).

In each forming drum 7, the sleeve 18 and the support pin 17 are shaped so as to enable an axial movement of the sleeve 18 relative to the support pin 17 so as to axially fit the sleeve 18 around the support pin 17 and so as to axially remove the sleeve 18 from the support pin 17 (as is illustrated in Figure 7). In particular, in each forming drum 7, the support pin 17 and the sleeve 18 (namely the outer surface of the support pin 17 and the inner surface of the sleeve 18) are shaped so as to have a shape coupling which makes the sleeve 18 angularly integral with the support pin 17; namely, the shape coupling between the support pin 17 and the sleeve 18 only enables an axial sliding of the sleeve 18 relative to the support pin 17.

In particular, the machine 6 comprises means for fixing the sleeve 18 to the support pin 17. In detail, such fixing means are arranged to act between sleeve 18 and support pin 17 when the sleeve 18 is mounted on the support pin 17 so as to make the sleeve 18 integral with the support pin 17.

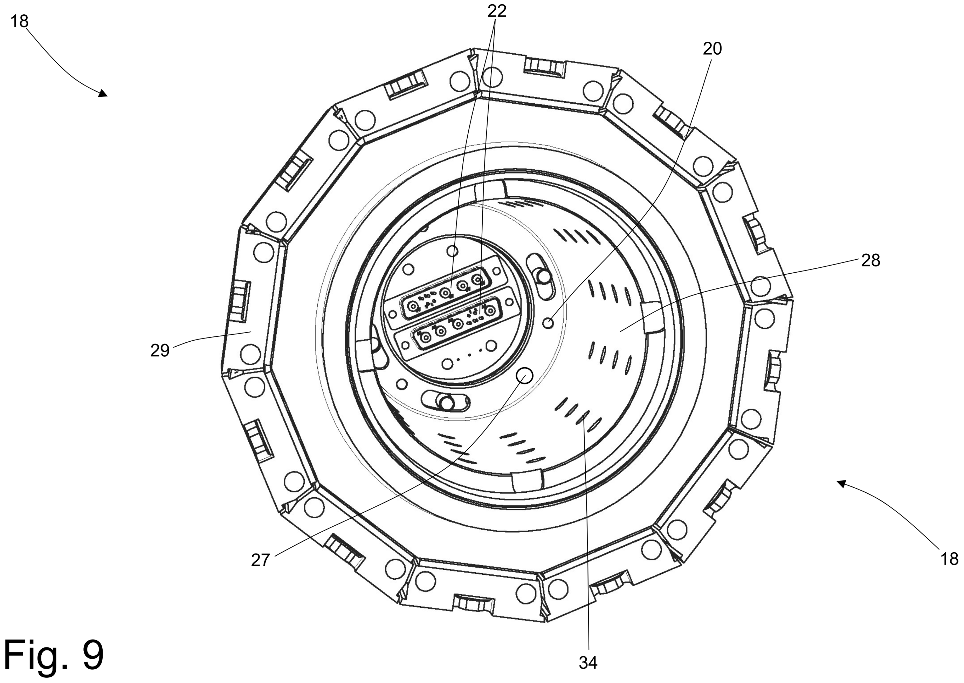

In accordance with an embodiment, the fixing means of each forming drum 7 comprise three locking screws 19, each of which is axially oriented (namely parallel to the rotation axis 8), is arranged through a through hole 20 (visible in Figure 9) made through the sleeve 18 and is screwed into a threaded hole 21 (visible in Figure 8) made through a tip of the support pin 17. Obviously, the number of the locking screws 19 of each forming drum 7 could be different varying from a minimum of one sole locking screw 19 to a maximum of ten locking screws 19.

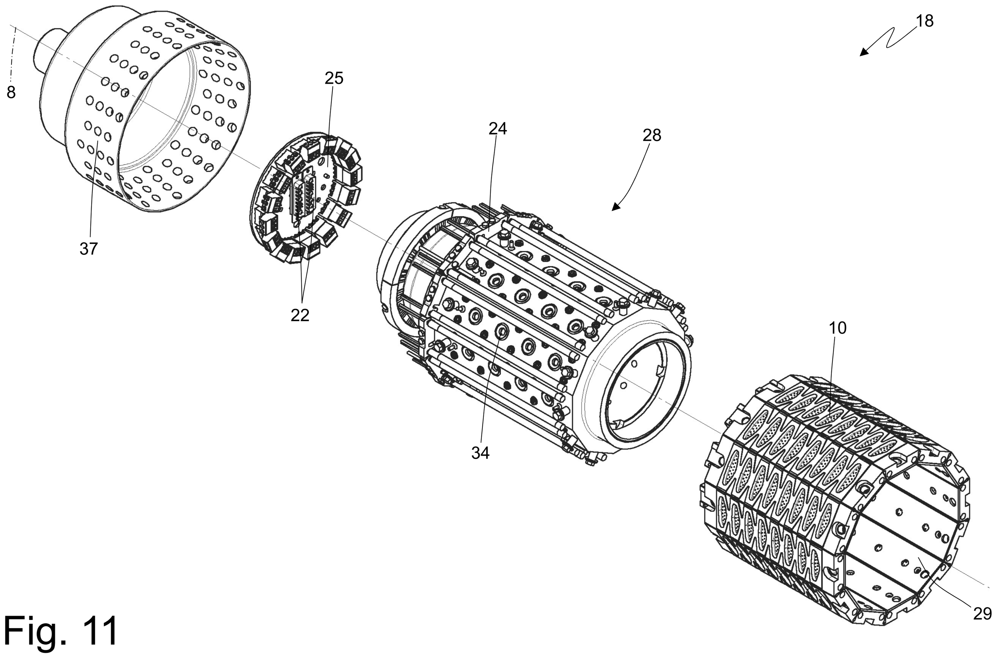

In each forming drum 7, the sleeve 18 internally has an electrical connector 22 (illustrated in Figures 9 and 11) and the support pin 17 externally has an electrical connector 23 (illustrated in Figure 8), which is configured to couple to the electrical connector 22 when the sleeve 18 is arranged around the support pin 17 and thus transfer electric current and/or electrical signals between the electrical connectors 22 and 23 (namely to electrically connect the sleeve 18 to the support pin 17 and thus to the remaining part of the manufacturing machine 6). In the embodiment illustrated in the accompanying figures, the electrical connector 22 comprises electrical contacts of the *"male"* type, whereas the electrical connector 23 comprises electrical contacts of the *"female"* type; according to other embodiments not illustrated, it could also be vice versa or the electrical contacts could be shaped differently.

In each forming drum 7, the sleeve 18 comprises electrical resistances 24 (illustrated in Figures 10 and 11), which are axially oriented, are distributed around the rotation axis 8 and are electrically powered by the electrical connector 22; namely, the electrical resistances 24 constitute an operating device, which is electrically powered by the electrical connector 22 and has a certain function (in this case that to heat) which is used during the production process. According to a preferred embodiment, each forming drum 7 comprises a distributor 25 (illustrated in Figures 10 and 11) with a circular shape, which is oriented perpendicular to the rotation axis 8 (namely is coaxial to the rotation axis 8) and electrically powers the electrical resistances 24, which are axially oriented and are distributed around the rotation axis 8.

According to a possible embodiment, the distributor 25 is passive and thus does not intervene in the control of the temperature of the electrical resistances 24; alternatively, the distributor 25 is active and thus has a control unit that controls the temperature of the electrical resistances 24.

In the sleeve 18 there could be provided temperature sensors that transmit the measurements of the temperature to the distributor 25; in turn, the distributor 25 can transmit the measurements of the temperature outside the forming drum 7 through the electrical connectors 22 and 23.

According to what is illustrated in Figure 8, the support pin 17 comprises at least one coupling peg 26, which axially extends from a tip of the support pin 17 and is arranged eccentric relative to the rotation axis 8; consequently, the sleeve 18 internally has a coupling hole 27 (illustrated in Figure 9) configured to receive the coupling peg 26 (in this manner, the sleeve 18 becomes angularly integral with the support pin 17). According to other embodiments not illustrated, a different number of coupling pegs 26 (for example two, three, four or five coupling pegs 26) and consequently a different number of coupling holes 27 are present.

According to a preferred but non-binding, embodiment better illustrated in Figures 10 and 11, in each forming drum 7, the sleeve 18 comprises a cylindrical inner portion 28 (which constitutes the load-bearing structure of the sleeve 18) and a plurality of bars 29, which are arranged around the cylindrical inner portion 28 and are fixed to the cylindrical inner portion 28 in a removable manner (typically by means of the screws possibly matched with a shape joint). The pockets 10 are made in the bars 29 and thus by replacing the bars 29 it is possible to modify the shape and/or the size of the pockets 10. In other words, in order to modify the shape and/or the size of the pockets 10 it is not necessary to replace the entire sleeve 18 but it is sufficient to replace the bars 29.

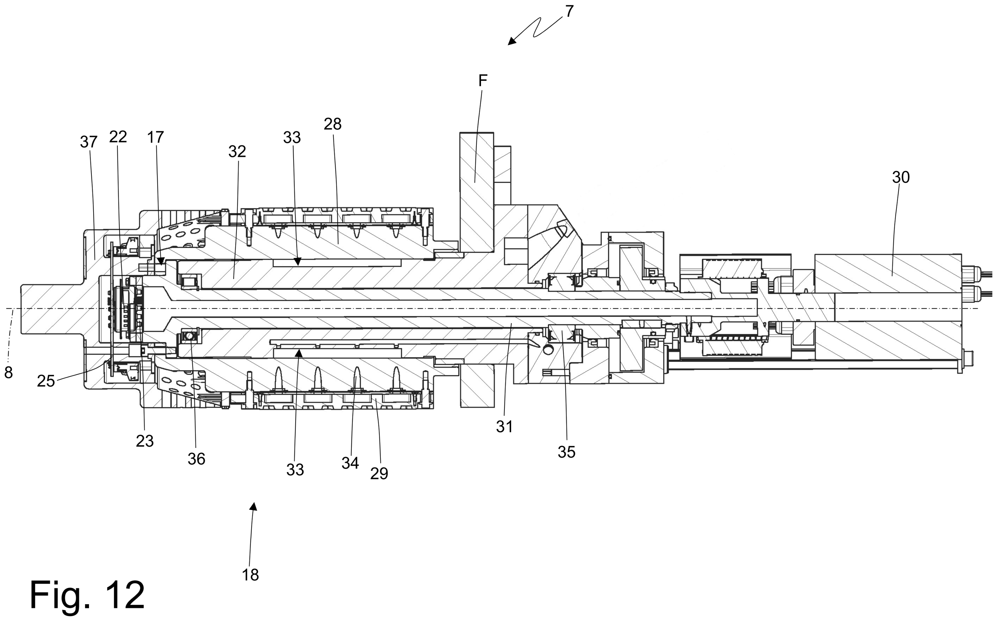

According to what is better illustrated in Figure 12, each forming drum 7 is coupled to an electric motor 30, which is mounted on the frame F coaxially to the rotation axis 8 and has a shaft 31, which is integrally connected to the support pin 17; in particular, each shaft 31 is a single monolithic piece which extends from the electric motor 30 to the support pin 17.

According to a preferred embodiment visible in Figures 8 and 12, each forming drum 7 is coupled to a tubular covering element 32, which is mounted integral with the frame F coaxially to the rotation axis 8, is arranged inside the sleeve 18 and surrounds an initial portion of the support pin 17, which is proximal to the frame F. Namely, the initial portion of the support pin 17 (proximal to the frame F) is arranged inside the covering element 32, whereas an end portion of the support pin 17 (distal from the frame F) comes out of the covering element 32 and is coupled to the sleeve 18. In other words, the covering element 32, being integral with the frame F, is still and thus the support pin 17 (which is partially inside the covering element 32) and the sleeve 18 (which is outside the covering element 32) rotate together relative to the covering element 32.

In each forming drum 7, the covering element 32 has two pneumatic chambers 33, each of which is internally connected to a pneumatic source (in particular to a suction source) and is externally open towards the sleeve 18; the sleeve 18 has pneumatic channels 34 connecting an inner surface of the sleeve 18 to an outer surface of the sleeve 18 in the area of the pockets 10 (in particular, the pneumatic channels 34 extend through the inner portion 28 of the sleeve 18 and through the bars 29). In use, when a pneumatic channel 34, during the rotation of the sleeve 18, arrives in the area of a pneumatic chamber 33 it can transmit the suction present in the pneumatic chamber 33 outside the sleeve 18 (namely inside corresponding pockets 10).

According to a preferred embodiment, each shaft 31 is supported by an inner bearing 35, which is directly fixed to the frame F and is proximal to the electric motor 30, and by an outer bearing 36, which is distal from the electric motor 30 and is arranged inside the covering element 32.

According to a preferred embodiment illustrated in the accompanying figures, each forming drum 7 comprises a cap 37 (better illustrated in Figures 6-7 and 10 -11) which is integral with the inner portion 28 and covers the distributor 25.

In the embodiment illustrated in the accompanying figures, the pouches 1 contain respective quantities 2 of snus; alternatively, the pouches 1 contain respective quantities 2 of a loose product different from the snus (for example tea or other powdered herb mixtures for infusion or for other uses).

In the exemplifying embodiment illustrated in the accompanying figures, the manufacturing machine 6 is an automatic machine which produces snus pouches 1 or pouches 1 of another loose product; according to other perfectly equivalent embodiments not illustrated, the automatic machine could be: a cigarette manufacturing machine; a cigarette filter manufacturing machine; a packaging machine that produces packs for cigarettes; a packaging machine that applies a transparent overwrap to packs for cigarettes; a packaging machine that manufactures cartons of packs for cigarettes; a cartoning machine; a packaging machine that produces packages for food products; a manufacturing machine that produces medicines; a packaging machine that produces packages for medicines; a packaging machine that produces packages for sanitary absorbent articles; a manufacturing machine for manufacturing sanitary absorbent articles. In other words, the products processed by the automatic machine can consist of smoking articles, sanitary articles, food articles, or pharmaceutical articles.

The embodiments described herein can be combined with one another.

The manufacturing machine 6 described above has numerous advantages.

Firstly, in the manufacturing machine 6 described above, the operations for mounting and removing the forming drums 7 are particularly quick and simple even for an unskilled operator. In this manner, the size change operations which require the replacement or the adjustment of the forming drums 7 (as all the maintenance and cleaning operations of the forming drums 7) can be executed easily and quickly.

Furthermore, the manufacturing machine 6 described above is relatively easy and cost-effective to manufacture.

### LIST OF THE REFERENCE NUMERALS OF THE FIGURES

- 1: snus pouch
- 2: quantity
- 3: cup-shaped element
- 4: edges
- 5: seal
- 6: manufacturing machine
- 7: forming drums
- 8: rotation axes
- 9: joining area
- 10: pockets
- 11: feeding unit
- 12: wrapping material band
- 13: insertion devices
- 14: feeding unit
- 15: advancement conveyor
- 16: cutting unit
- 17: support pin
- 18: sleeve
- 19: locking screw
- 20: through hole
- 21: threaded hole
- 22: electrical connector
- 23: electrical connector
- 24: electrical resistances
- 25: distributor
- 26: coupling peg
- 27: coupling hole
- 28: inner portion
- 29: bars
- 30: electric motor
- 31: shaft
- 32: covering element
- 33: pneumatic chamber
- 34: pneumatic channels
- 35: bearing
- 36: bearing
- 37: cap
- S1: feeding station
- S2: feeding station
- S3: inspection station
- D: advancement direction
- F: frame

## Claims

1. An automatic machine (6) for the production or the packaging of products (1), comprising:
a frame (F);
a processing line, along which the products (1) are processed; and
at least one drum (7), which constitutes part of the processing line and has a support pin (17), which is mounted on the frame (F) in a rotary manner so as to rotate around a rotation axis (8), and a sleeve (18), which is integral with the support pin (17) and is arranged around the support pin (17);
wherein the sleeve (18) and the support pin (17) are shaped so as to enable an axial movement of the sleeve (18) relative to the support pin (17) so as to axially fit the sleeve (18) around the support pin (17) and so as to axially remove the sleeve (18) from the support pin (17);
the automatic machine (6) is **characterized in that** the sleeve (18) internally has a first electrical connector (22) and the support pin (17) externally has a second electrical connector (23), which is configured to couple to the first electrical connector (22) when the sleeve (18) is arranged around the support pin (17) and thus transfer electric current and/or electrical signals between the electrical connectors (22, 23).

2. The automatic machine (6) according to claim 1, wherein the support pin (17) and the sleeve (18) are shaped so as to have a shape coupling that makes the sleeve (18) angularly integral with the support pin (17) and, therefore, the shape coupling between the support pin (17) and the sleeve (18) only enables an axial sliding of the sleeve (18) relative to the support pin (17).

3. The automatic machine (6) according to claim 1 or 2 and comprising means for fixing the sleeve (18) to the support pin (17); in particular, the fixing means comprising at least one locking screw (19), which is axially oriented, is arranged through a through hole (20) made through the sleeve (18) and is screwed into a threaded hole (21) made through a tip of the support pin (17).

4. The automatic machine (6) according to claim 1, 2 or 3, wherein the sleeve (18) comprises an operating device, which is electrically powered by the first electrical connector (22).

5. The automatic machine (6) according to one of the claims from 1 to 4, wherein the operating device comprises electrical resistances (24) configured to heat the sleeve (18).

6. The automatic machine (6) according to claim 5, wherein the drum (7) comprises a distributor (25) with a circular shape, which is oriented perpendicular to the rotation axis (8) and is configured to electrically power the electrical resistances (24), which are axially oriented and are distributed around the rotation axis (8).

7. The automatic machine (6) according to one of the claims from 1 to 6, wherein the support pin (17) comprises at least one coupling peg (26), which axially extends from a tip of the support pin (17) and is arranged eccentrically relative to the rotation axis (8), and the sleeve (18) internally has a coupling hole (27), which is configured to receive the coupling peg (26).

8. The automatic machine (6) according to one of the claims from 1 to 7 and comprising an electric motor (30), which is mounted on the frame (F) coaxially to the rotation axis (8) and has a shaft (31), which is integrally connected to the support pin (17).

9. The automatic machine (6) according to one of the claims from 1 to 8 and comprising a tubular covering element (32), which is mounted integral with the frame (F) coaxially to the rotation axis (8), is arranged inside the sleeve (18) and surrounds an initial portion of the support pin (17), which is proximal to the frame (F).

10. The automatic machine (6) according to claim 9, wherein:
the covering element (32) has at least one pneumatic chamber (33), which is internally connected to a pneumatic source and is externally open towards the sleeve (18); and
the sleeve (18) has pneumatic channels (34) connecting an inner surface of the sleeve (18) to an outer surface of the sleeve (18).

11. The automatic machine (6) according to claim 9 or 10 and comprising a bearing (36), which supports a shaft (31) integrally connected to the support pin (17) and is arranged inside the covering element (32).

12. The automatic machine (6) according to one of the claims from 1 to 11, wherein the sleeve (18) comprises a cylindrical inner portion (28) and a plurality of bars (29), which are arranged around the cylindrical inner portion (28) and are fixed to the cylindrical inner portion (28) in a removable manner.

13. The automatic machine (6) according to one of the claims from 1 to 12, wherein the drum externally has a series of seats (10), each designed to contain a quantity of a product (2).

14. The automatic machine (6) according to one of the claims from 1 to 13 and configured for the production of pouches (1), each containing a quantity (2) of a loose product, in particular snus.

15. The automatic machine (6) according to claim 14 and comprising:
a first drum (7), which is mounted so as to rotate around a first rotation axis (8) and has at least one first pocket (10) shaped so as to reproduce in negative part of a shape of the pouch (1);
a second drum (7), which is mounted so as to rotate around a second rotation axis (8) parallel to the first rotation axis (8) and is coupled to the first drum (7) so as to define a joining area (9) comprised between the two drums (7);
a first feeding unit (11) configured to feed, in a first feeding station (S1) arranged upstream of the joining area (9), a first wrapping material band (12), which wraps itself around part of the periphery of the first drum (7);
a second feeding unit (11) configured to feed, in a second feeding station (S1) arranged upstream of the joining area (9), a second wrapping material band (12), which wraps itself around part of the periphery of the second drum (7), so that the second wrapping material band (12) overlaps the first wrapping material band (12) in the joining area (9), thereby forming each pouch (1); and
a third feeding unit (14) configured to feed, in a third feeding station (S2) arranged between the first feeding station (S1) and the joining area (9), a quantity (2) of loose product into the first pocket (10) of the first drum (7) with the interposition of the first wrapping material band (12).
